# EUROPEAN PATENT SPECIFICATION

(11) **EP 0 437 873 B1**
(45) Date of publication and mention of the grant of the patent: **05.10.1994**
(21) Application number: 90203155.8
(22) Date of filing: 30.11.1990
(51) Int. Cl.: A22C 17/12, B26D 7/26

(54) **Clamping blade holder device particularly for skinning machines and the like, in meat processing**
Klemmvorrichtung für ein Messer einer Fleischenthäutungsmaschine
Dispositif de serrage de lame pour machine à écorcher les viandes

(30) Priority: 16.01.1990 IT 4680490
(43) Date of publication of application: 24.07.1991
(73) Proprietor: Grasselli, Giorgio, I-42020 Albinea Reggio Emilia (IT)
(72) Inventor: Grasselli, Giorgio, I-42020 Albinea Reggio Emilia (IT)
(74) Representative: Corradini, Corrado

(56) References cited:
- DE-A- 3 611 933
- DE-B- 1 293 636
- DE-C- 3 413 250
- FR-A- 805 367
- GB-A- 2 182 881
- US-A- 3 496 823

## Description

This invention relates to a blade holder device particularly for skinning machines and the like in meat processing, of the type which clamps the blade body parallel to its cutting edge.

In general, and particularly in skinning machines, blade holder devices are known provided with two mutually facing and contacting members at the front of which the blade body is interposed, with its cutting edge projecting beyond said members.

To forcibly clamp the blade interposed between the members there are provided screw means or the like which pass through both the members and tighten them one against the other.

Although said known devices effectively clamp the blade, they have certain drawbacks relating to the need to separate the two members in order to change the blade or to properly clean the mutually contacting surfaces. In this respect, it is normally necessary to frequently change the blade, particularly in skinning machines.

Known blade holder devices require a relatively long time to achieve this because in order to separate the two members the various screw means must firstly be released, unscrewed and removed, and these operations repeated in the reverse direction to again fix the two members together with the blade between them.

In GB-A-2182881 there is disclosed a blade holder for a microtone having two members faced together for clamping a blade between the front portions of the facing surfaces of the two members; it has a screw means to retain the two members together to prevent the facing surfaces from moving apart in a direction perpendicular to these surfaces, and cam means able to exert a thrust to move the facing surfaces apart in a perpendicular direction in order to cause the front portions of the facing surfaces to clamp the blade.

This device also requires to unscrew the screw means in order to separate the two members, e.g. for cleaning the facing surfaces.

The object of the present invention is to provide a blade holder device, in particular for skinning machines, in which the separation and refixing of the blade clamping members is achieved by extremely simple operations in relatively very short times.

The device must also take account of the fact that for its application to skinning machines it requires a substantially continuous smooth external surface free of recesses, projections, gaps and the like, to prevent the surface being able to retain processing debris and dirt particles in general, and to make the surface easily washable. In addition if applied to skinning machines the device must assume a typical pointed shape in its frontal region, as it has to be bought close to a toothed roller which drives the meat pieces.

The invention is described in detail hereinafter with reference to the accompanying figures which illustrate a preferred but not exclusive embodiment thereof.

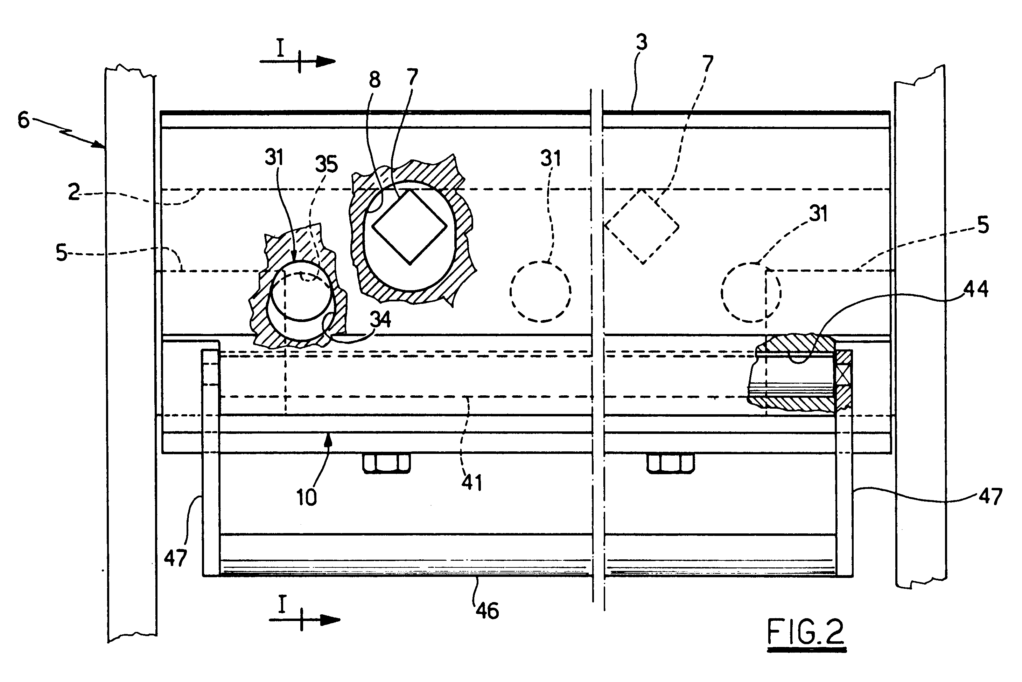

Figure 1 is a section on the line I-I of Figure 2.
Figure 2 is a top plan view of the device concerned.

The device comprises a first member 10 and a second member 20. The first member 10 comprises a surface 11 the front portion of which is flat and arranged to make contact with one of the two major faces of the blade 2.

The second member 20 comprises, facing the surface 11, a surface 21 the front portion of which is flat and is arranged to make contact with the other major face of the blade 2 and also to clamp the body of the blade 2 in cooperation with the front portion of the surface 11.

Means 30 are provided to retain the two members 10 and 20 together to prevent the two facing surfaces 11 and 21 moving apart in a direction perpendicular to said surfaces. The means 30 are provided in the intermediate region of the surfaces 11 and 21 and are inserted and withdrawn by moving the two members relative to each other in a direction parallel to the facing surfaces 11 and 21.

Finally, cam means 40 are provided to exert a thrust tending to move the facing surfaces 11 and 21 apart in a direction perpendicular to said surfaces. The means 40 are provided in the rear region of the surfaces 11 and 21, ie on the other side of the means 30 to the side in which the blade 2 is clamped.

The two members 10 and 20 act substantially as two levers pivoted together by the means 30. Tie thrust is provided by the means 40 which by moving the rear regions of the members 10 and 20 apart cause the front regions to move together and thus clamp the blade 2.

When the cam means 40 are not acting, the means 30 can be withdrawn and reinserted by moving the members 10 and 20 parallel to the surfaces 11 and 21.

The retention means 30 comprise one or more coupling elements 31 projecting from the surface 11 or 21 of a member 10 or 20 and are fixed to this member. In the figures the elements 31 are fixed to the member 10. Each element 31 comprises a final portion 32 (ie located at its free end) which projects laterally to an initial portion 33 (ie located at the surface 11 or 21 to which the element 31 is fixed) to form a concave angle therewith.

In that surface 11 or 21 of the member 10 or 20 opposite that to which the elements 31 are fixed there are provided one or more cavities 34 in positions corresponding with the elements 31. In the figures the cavities 34 are provided in the surface 21. Each cavity 34 is arranged to receive and contain a respective coupling element 31 and also defines in the member 10 or 20 in which it is provided an undercut element 35 which can be inserted substantially as an exact fit into said concave angle formed by the portions 32 and 33.

In the illustrated embodiment each element 31 comprises a shank 36 screwed into a corresponding hole in the member 10 and surmounted by a cylindrical portion 33, itself surmounted by an also cylindrical portion 32 having a larger diameter than the portion 33. The cavity 34 comprises a cylindrical main region having a diameter slightly larger than the diameter of the portion 32 and a height slightly greater than the height of the entire element 31. This region is therefore able to receive and contain the entire element 31 when this is inserted by a movement perpendicular to the two surfaces 11 and 21. The cavity 34 also comprises a further region which defines said undercut element 35 and is able to receive the portion 32 as an exact fit.

The cam means 40 comprise a cylindrical bar 41 of circular cross-section provided with a flat face 42 extending along the entire length of the bar. The bar 41 is disposed between the surfaces 11 and 21 with its axis parallel to the cutting edge 3 of the blade 2.

The bar 41 is contained as an exact fit in a cavity 43 provided in the surface 21 of the body 20 and having its aperture 44 extending along the entire length of the cavity and communicating with the surface 21. The cavity 43 has a rectangular cross-section aid a depth less than the maximum diameter of the bar 41. The cavity 43 can be provided in either one of the members 10 and 20.

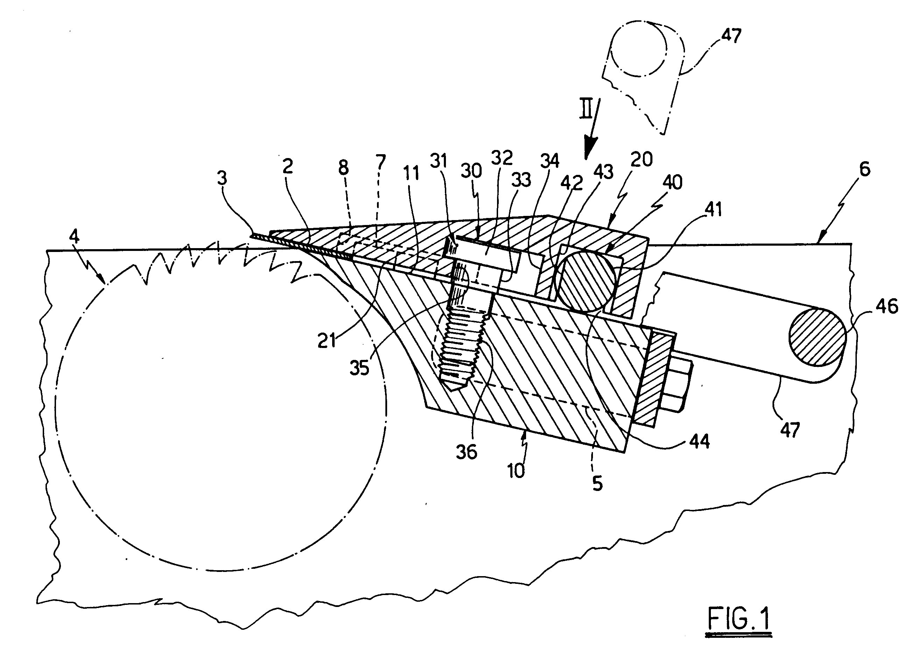

Suitable means are also provided for rotating the bar 41 between a first position in which a bar portion of arched cross-section projects from the aperture 44 (as shown in Figure 1) and a second position in which the flat face 42 corresponds with the aperture 44.

When the bar 41 is in the first position, its arched portion which projects from the aperture 44 pushes against the opposing surface 11 and hence urges the rear regions of the surfaces 11 and 21 apart. The thrust is such that by the pivoting action provided by the retention means 30, the front regions of the surfaces 11 and 21 tend to move together to clamp the blade 2 with sufficient force.

In contrast, when the bar 41 is in said second position there is sufficient clearance between the rear portions and front portions of the surfaces 11 and 21 to allow the two members 10 and 20 to be freely moved relative to each other in a direction parallel to the surfaces themselves.

To retain the bar 41 in the cavity 43 this comprises at its ends two constrictions which surround the bar 41 through an arc greater than 180° while leaving the aperture 44 free.

To rotate the bar 41 a handgrip 46 is provided parallel to the bar 41 and is fixed rigidly thereto by two levers 47.

The device shown in the figures is typically suitable for skinning machines. Consequently the lower member 10 has a concave front region with an arched profile so that the blade can be brought close to a toothed roller 4 of known type which drives the meat pieces to be worked against the blade 2. The member 10 also comprises two lateral recesses into which suitable elements 5 are fitted to secure the member 10 to the machine structure 6. Appropriate elements 7 are also provided inserted into the member 10, their head projecting from the surface 11. The purpose of the elements 7 is to define the rear contact line for correctly positioning the blade 2 on the surface 11 and are contained in corresponding cavities 8 provided in the surface 21.

In the illustrated embodiment, to separate the two members 10 and 20 the handgrip 46 is raised into its upper position (shown by dashed lines in Figure 1) so that the flat face 42 faces the surface 11. Thus although the members 10 and 20 are coupled together by the elements 31 there is no clamping action on the blade and a certain clearance exists between the surfaces 11 and 21. The member 20 can therefore be moved slightly forward relative to the body 10 to release the portions 32 from the elements 35. The member 20 can now be raised and removed to release the blade 2, which now only rests on the member 10.

To assemble the device the reverse procedure is used. The blade 2 is firstly placed on the surface 11 against the elements 7. The member 20 is then rested on the member 10 with a movement perpendicular to the surfaces 11 and 21 and causing the elements 31 to enter the cavities 34. The member 20 is then moved slightly backwards to insert the portions 32 so that they rest on the elements 35. Finally, the handgrip 46 is lowered by rotating it through about 90° (as shown by the continuous line in Figure 1). This rotation causes an arched portion of the profile of the bar 41 to project from the surface 21 and against the surface 11, to pull the rear portions of the two surfaces 11 and 21 apart to such an extent as to create a sufficient clamping action on the blade 2.

With the device of the invention the separation and reassembly of the two members 10 and 20 are extremely rapid and simple operations.

In addition the means 30 and 40 are housed in cavities open only in the surfaces 11 and 21 and consequently the external surfaces of the entire device can be substantially continuous and smooth, so facilitating surface cleaning and hygiene.

Numerous modifications of a practical and applicational nature can be made to the device of the invention but without leaving the scope of the claims.

## Claims

1. A blade holder device particularly for skinning machines and the like, of the type which clamps the blade body parallel to its cutting edge, comprising:
- a first member (10) comprising a surface (11) the front portion of which is arranged to make contact with a major face of the blade (2);
- a second member (20) comprising, facing the surface (11) of the first member (10), a surface (21) the front portion of which is arranged to make contact with the other major face of the blade (2) and to clamp the blade body in cooperation with the front portion of the other surface (11);
- means (30) to retain the two members (10,20) together to prevent said facing surfaces (11,21) from moving apart in a direction perpendicular to these surfaces said means (30) being provided in the intermediate region of the facing surfaces (11,21);
- cam means (40) able to exert a thrust tending to move the facing surfaces (11,21) apart in a direction perpendicular to these surfaces, said means (40) being provided in the rear region of the facing surfaces (11,21);
characterised in that said retention means (30) comprise:
- at least one coupling element (31) fixed to and projecting from said surface (11, 21) of one of said members (10, 20), its final portion (32) projecting laterally from its initial portion (33) to form a concave angle therewith;
- at least one cavity (34) provided in the surface (21, 11) of the other member (20, 10) to receive said coupling element (31), said cavity (34) defining in the member (20, 10) in which it is provided an undercut element (35) which can be inserted substantially as an exact fit into said concave angle;
- the retention means (30) being insertable and withdrawable by moving the two members (10,20) relative to each other in a direction parallel to the facing surfaces (11,21).

2. A device as claimed in claim 1, characterised in that:
said coupling element (31) comprises an initial cylindrical portion (33) surmounted by a cylindrical final portion (32) of greater diameter than the initial portion (33);
said cavity (34) comprising a cylindrical main region able to receive the entire coupling element (31) by insertion perpendicular to the facing surfaces (11, 21), and a further region forming said undercut element and able to receive as an exact fit part of the final portion (32) of the coupling element (31).

3. A device as claimed in claim 1, characterised in that said cam means (40) comprise:
- a cylindrical bar (41) having a circular cross-section cut by a flat face (42) and disposed between said facing surfaces (11) and (12) with its axis parallel to the blade cutting edge;
- a cavity (43) formed in the surface (11, 21) of one member (10, 20) and provided with an aperture communicating with this surface (11, 21), said cavity (43) being able to contain the cylindrical bar (41) as an exact fit and having a depth less than the maximum diameter of the bar (41);
- means for rotating said bar (41) between a first position in which a portion of the bar (41) of arched cross-section projects from said aperture (44) of the cavity (43), and a second position in which the flat face (42) of the bar (41) lies in a position corresponding with said aperture (44);
- it being arranged that when the bar (41) is in the first position, that portion of it which projects from said aperture (44) urges the rear regions of the surfaces (11) and (21) to move apart to the extent that, by virtue of the fulcrum formed by the retention means (30), the front regions of the surfaces (11) and (21) clamp the blade with sufficient force;
- it being further arranged that when the bar (41) is in said second position a sufficient clearance exists between the surfaces (11) and (21) of the members (10 and (20) to allow free relative movement of the two members (10 and (11) in a direction parallel to said surfaces (11) and (21).

## Patentansprüche

1. Messerhaltevorrichtung, insbesondere für Enthäutungsmaschinen und ähnlichem, wobei der Messerkörper parallel zu seiner Schneidkante geklemmt ist, mit folgenden Merkmalen:
- ein erstes Glied (10), das eine Fläche (11) aufweist, dessen Frontabschnitt so ausgebildet ist, daß in Kontakt mit einer Hauptfläche des Messers (2) liegt;
- ein zweites Glied (20), das der Fläche (11) des ersten Gliedes (10) gegenüberliegt und das eine Fläche (21) aufweist, deren Frontabschnitt so ausgestaltet ist, daß er in Kontakt mit der anderen Hauptfläche des Messers liegt und der den Messerkörper zusammen mit dem Frontabschnitt der anderen Fläche (11) klemmt;
- eine Einrichtung (30), die dazu vorgesehen ist, die zwei Glieder (10,20) zusammenzuhalten und zu verhindern, daß die einander gegenüberliegenden Flächen (11,21) sich in eine Richtung senkrecht zu diesen Flächen wegbewegen, wobei die Einrichtung (30) in der Zwischenregion der einander gegenüberliegenden Flächen (11,21) vorgesehen ist;
- eine Nockeneinrichtung (40), die fähig ist, eine Kraft auszuüben, die dazu führt, daß sich die einander gegenüberliegenden Flächen (11,21) in Richtung senkrecht zu diesen Flächen auseinander bewegen, wobei die Einrichtung (40) im hinteren Bereich der einander gegenüberliegenden Flächen (11,21) vorgesehen ist;
**dadurch gekennzeichnet,** daß die Rückhalteeinrichtung (30) folgendes aufweist:
- wenigstens ein Kuppelelement (31), das an der Fläche (11,21) von einem der Glieder (10,20) befestigt ist und sich aus diesem erstreckt, wobei sich sein Endteil (32) seitlich von seinem Anfangsteil (33) erstreckt, um einen konkaven Winkel dazwischen zu bilden;
- wenigstens eine Ausnehmung (34), die in der Fläche (21,11) des anderen Gliedes (20,10) vorgesehen ist, um das Kuppelelement (31) aufzunehmen, wobei die Ausnehmung (34) in dem Glied (20,10), in dem es vorgesehen ist, ein Hinterschneidungselement (35) erzeugt, das im wesentlichen als eine exakte Passung in dem konkaven Winkel eingefügt werden kann;
- die Rückhalteeinrichtung (30) ist durch Bewegen der zwei Glieder (10,20) relativ zueinander in eine Richtung parallel zu den sich gegenüberliegenden Flächen (11,21) einsetz- und entnehmbar.

2. Vorrichtung nach Anspruch 1,
**dadurch gekennzeichnet,** daß das Kuppelelement (31) ein Anfangszylinderteil (33) aufweist, das durch ein Zylinderendteil (32) von größerem Durchmesser als das Anfangsteil (33) überhöht ist;
wobei die Ausnehmung (34) einen zylindrischen Hauptabschnitt, in welchem das ganze Kuppelelement (31) durch Einfügung senkrecht zu den sich gegenüberliegenden Flächen (11,21) aufnehmbar ist und einen weiteren Abschnitt aufweist, der das Hinterschneidungselement bildet und der geeignet ist als eine exakte Passung einen Teil des Endteiles (32) des Koppelelementes (31) aufzunehmen.

3. Vorrichtung nach Anspruch 1,
**dadurch gekennzeichnet,** daß die Nockeneinrichtung folgendes aufweist:
- einen zylinderförmigen Stab (41), der einen kreisförmigen Querschnitt aufweist, welcher durch eine Abflachung (42) ausgeschnitten ist und der zwischen den einander gegenüberliegenden Flächen (11,12) mit seiner Achse parallel zu der Messerschneidekante angeordnet ist;
- eine Ausnehmung (43), die in eine Fläche (11,21) von einem der Glieder (10,20) eingeformt ist und die mit einer Öffnung versehen ist, die mit dieser Fläche (11,21) in Verbindung steht, wobei die Ausnehmung (43) dazu vorgesehen ist, den zylindrischen Stab (41) als eine exakte Passung aufzunehmen und die eine Tiefe besitzt, die kleiner ist als der maximale Durchmesser des Stabes (41);
- eine Einrichtung zum Drehen des Stabes (41) zwischen einer ersten Position, in der ein Teil des Stabes (41) eines bogenförmigen Querschnittes sich aus der Öffnung (44) der Ausnehmung (43) erstreckt, und einer zweiten Position, in der die Abflachung (42) des Stabes (41) in einer Position liegt, die mit der Öffnung (44) korrespondiert;
- die Nockeneinrichtung (40) so angeordnet ist, daß, wenn der Stab (41) in der ersten Position liegt, der Abschnitt von ihm, der sich aus der Öffnung (44) erstreckt, die hinteren Abschnitte der Flächen (11,21) dazu zwingt, sich in einem derartigen Umfang von einander weg zu bewegen, daß aufgrund des Hebeldrehpunktes, der durch das Zurückhalteglied (30) gebildet wird, die vorderen Abschnitte der Flächen (11,21) das Messer mit ausreichender Kraft klemmen;
- die Nockeneinrichtung ferner derart ausgebildet ist, daß, wenn der Stab (41) sich in der zweiten Position befindet, sich ein ausreichendes Spiel zwischen den Flächen (11,21) der Glieder (10,20) ergibt, um eine freie relative Bewegung der zwei Glieder (10,11) in einer Richtung parallel zu den Flächen (11,21) zu ermöglichen.

## Revendications

1. Dispositif support de lame en particulier pour machines à dépouiller et analogues, du type qui serre et bloque le corps de la lame parallèlement à son tranchant, comprenant :
- un premier organe (10) comprenant une surface (11) dont la partie frontale est disposée de façon à entrer en contact avec une face principale de la lame (2) ;
- un second organe (20) comprenant, faisant face à la surface (11) du premier organe (10), une surface (21) dont la partie frontale est disposée de façon à entrer en contact avec l'autre face principale de la lame (2) et de manière à serrer le corps de la lame en coopération avec la partie frontale de l'autre surface (11) ;
- des moyens (30) pour maintenir les deux organes (10, 20) ensemble de façon à empêcher lesdites surfaces qui se font face (11, 21) de se déplacer en s'écartant dans une direction perpendiculaire à ces surfaces, lesdits moyens (30) étant prévus dans la région intermédiaire des surfaces qui se font face (11, 21) ;
- des moyens formant came (40) susceptibles d'exercer une poussée tendant à déplacer les surfaces qui se font face (11, 21) en les écartant dans une direction perpendiculaire à ces surfaces, lesdits moyens (40) étant prévus dans la région arrière desdites surfaces qui se font face (11, 21) ;
ledit dispositif étant caractérisé en ce que lesdits moyens de maintien (30) comprennent :
- au moins un élément de couplage (31) fixé à et faisant saillie à partir de ladite surface (11, 21) de l'un desdits organes (10, 20), sa partie finale (32) faisant saillie latéralement à partir de sa partie initiale (33) de façon à former avec elle un angle concave ;
- au moins une cavité (34) étant prévue dans la surface (21, 11) de l'autre organe (20, 10) de façon à recevoir ledit élément de couplage (31), ladite cavité (34) définissant dans l'organe (20, 10) dans lequel elle est prévue un élément entaillé (35) qui peut être inséré sensiblement en ajustement exact avec ledit angle concave ;
- lesdits moyens de retenue (30) pouvant être insérés et retirés en déplaçant les deux organes (10, 20) relativement l'un par rapport à l'autre dans une direction parallèle aux surfaces qui se font face (11, 21).

2. Dispositif selon la revendication 1, caractérisé en ce que : ledit élément de couplage (31) comprend une partie initiale cylindrique (33) surmontée par une partie finale cylindrique (32) de plus grand diamètre que la partie initiale (33) ; ladite cavité (34) comprenant une région principale cylindrique susceptible de recevoir l'élément de couplage (31) entier par introduction perpendiculairement aux surfaces qui se font face (11, 21) et une autre région formant ledit élément entaillé et étant susceptible de recevoir comme une partie exactement ajustée de la partie finale (32) de l'élément de couplage (31).

3. Dispositif selon la revendication 1, caractérisé en ce que lesdits moyens formant came comprennent :
- une barre cylindrique (41) présentant une section transversale circulaire coupée par une face plate (42) et disposée entre lesdites surfaces qui se font face (11) et (12) avec son axe parallèle au tranchant de la lame ;
- une cavité (43) formée dans la surface (11, 21) d'un organe (10, 20) et prévue avec une ouverture communiquant avec cette surface (11, 21), ladite cavité (43) étant susceptible de contenir la barre cylindrique (41) en ajustement exact et ayant une épaisseur inférieure au diamètre maximum de la barre (41) ;
- des moyens pour faire tourner ladite barre (41) entre une première position dans laquelle une partie de la barre (41) de section transversale courbe fait saillie hors de l'ouverture (44) de la cavité (43) et une seconde position dans laquelle la face plate (42) de la barre (41) est située dans une position correspondant à ladite ouverture (44) ;
- le tout étant disposé de façon que lorsque la barre (41) est dans la première position, cette partie de la barre qui fait saillie hors de ladite ouverture (44) presse les régions arrières des surfaces (11) et (21) de façon à les écarter jusqu'à un degré tel que, sous l'action de l'articulation formée par les moyens de maintien (30), les régions frontales des surfaces (11) et (21) serrent la lame avec une force suffisante ;
- le tout étant en outre disposé de telle façon que lorsque la barre (41) est dans ladite seconde position, un jeu suffisant existe entre les surfaces (11) et (21) des organes (10) et (20) de façon à permettre le mouvement libre relatif des deux organes (10) et (11) dans une direction parallèle auxdites surfaces (11) et (21).
